# FASCICULE DE BREVET EUROPEEN

(11) **EP 2 697 318 B1**
(45) Date de publication et mention de la délivrance du brevet: **28.11.2018**
(21) Numéro de dépôt: 12722773.4
(22) Date de dépôt: 11.04.2012
(51) Int. Cl.: C09D 11/02, C08J 5/18, C09D 11/10, B32B 17/10, B41M 1/12, B41M 1/30, C09D 129/14

(54) **COMPOSITION SERIGRAPHIABLE SUR POLYVINYLBUTYRAL**
DURCH SIEBDRUCK AUF POLYVINYLBUTYRAL DRUCKBARE ZUSAMMENSETZUNG
COMPOSITION THAT CAN BE SCREEN PRINTED ONTO POLYVINYL BUTYRAL

(30) Priorité: 12.04.2011 FR 1153189
(43) Date de publication de la demande: 19.02.2014
(73) Titulaire: Saint-Gobain Glass France, 92400 Courbevoie (FR)
(72) Inventeur: WERY, Sébastien, F-60200 Compiegne (FR); DUCOURTHIAL, Elodie, F-60200 Compiegne (FR); DEBRAINE, Angélique, F-60680 GRANDEFRESNOY (FR); BARBIER, Benoît, B-1090 Jette (BE); DUCLAUX, Virginie, F-75010 Paris (FR)
(74) Mandataire: Saint-Gobain Recherche
(86) Numéro de dépôt international: PCT/FR2012/050785
(87) Numéro de publication internationale: WO 2012/140362

(56) Documents cités:
- FR-A1- 2 928 929

## Description

L'invention est relative au domaine des vitrages feuilletés, communément constitués de deux feuilles de verre collées l'une à l'autre par l'intermédiaire d'un intercalaire plastique, tel qu'une feuille de polyvinylbutyral.

Les vitrages feuilletés, tels qu'utilisés comme pare-brise de véhicule automobile, ou équivalent, comportent de nombreuses fonctionnalités : couche réfléchissant le rayonnement solaire, permettant d'abaisser la température du tableau de bord et la température ambiante dans l'habitacle, support de rétroviseur intérieur, bus-bars d'amenée de courant électrique notamment pour une couche ITO ou un réseau de fils chauffants, bande supérieure filtrant le rayonnement solaire, à coloration éventuellement dégradée, détecteur de pluie ... Les vitrages feuilletés sont ainsi imprimés à diverses fins : bord du vitrage opacifié sur toute sa périphérie pour protéger la colle sous-jacente du rayonnement UV et cacher des éléments de carrosserie ou joints de la vue d'un observateur à l'extérieur du véhicule, inscriptions relatives au fabricant, à diverses normes, surface opacifiée pour cacher l'embase du rétroviseur intérieur de la vue d'un observateur à l'extérieur du véhicule.

L'invention a plus particulièrement trait à l'impression en noir d'un vitrage feuilleté pour en opacifier une partie de la surface.

Il est habituel de réaliser de telles impressions sur feuilles de verre plat, c'est-à-dire le cas échéant avant des opérations de bombage (la difficulté d'imprimer sur des surfaces bombées est en effet bien supérieure). Un procédé préféré est la sérigraphie de l'émail : il est apte à procurer les qualités optiques requises : bonnes couvrance, opacité et résolution, et il est aisément industrialisable.

La sérigraphie sur feuilles de verre plat n'est pas sans inconvénient. Dans un feuilleté, l'émail est sérigraphié en face intérieure de la feuille de verre destinée à la position extérieure, c'est-à-dire en contact avec l'atmosphère, appelée face 2, et/ou en face extérieure de la feuille de verre destinée à la position intérieure, appelée face 4, qui est en contact avec l'atmosphère intérieure, notamment de l'habitacle d'un véhicule de transport.

Les inconvénients de l'émaillage en face 2, intérieure dans la structure du feuilleté assemblé, peuvent être décrits de la manière suivante. Les feuilles de verre lors de leur bombage, deux par deux, entrent en contact physique les unes avec les autres malgré la présence d'intercalaire poudreux, ou avec des éléments mécaniques des installations de bombage. Ce contact physique nécessite l'emploi préalable d'un four supplémentaire pour la recuisson de la composition d'impression, afin d'éviter que les surfaces imprimées insuffisamment durcies et séchées ne soient affectées : collage des deux feuilles de verre, malgré la séparation due à l'intercalaire poudreux, création de défauts à la surface de l'émail non durcie, par exemple. Cette recuisson est une étape supplémentaire du procédé qui engendre un coût supplémentaire sur ligne de production.

Dans l'émaillage de la face 4, extérieure dans la structure du feuilleté assemblé, la cuisson de l'émail induit de manière connue la création d'un défaut optique.

D'autres inconvénients communs à ces émaillages des faces 2 et 4 existent.

Tout d'abord il est nécessaire de définir un chauffage parfaitement adapté et différencié pour les zones émaillées d'une part, non émaillées d'autre part, car l'émail n'absorbe pas la même quantité de chaleur que le verre. Le chauffage doit être ainsi modifié pour chaque configuration de vitrage feuilleté, de pare-brise, avec et sans détecteur de pluie, de luminosité...

De plus la densité optique de l'émail noir après la cuisson est de l'ordre de 3. Or des densités optiques légèrement supérieures à cette valeur peuvent être requises, ce qui ne peut être obtenu qu'en augmentant l'épaisseur d'émail déposée.

Ces problèmes pourraient être résolus en réalisant la sérigraphie sur les feuilles adhésives intercalaires rentrant dans la composition d'un vitrage feuilleté, à l'image des feuilles de polyvinylbutyral, et non plus sur les feuilles de verre. La demande française n° FR 2 928 929 A1 divulgue une composition pour la sérigraphie sur une feuille de polyvinylbutyral intercalaire de vitrage feuilleté. Elle comprend 2 à 35 % en masse de résine polyvinylbutyral, 1 à 50 % en masse d'au moins un pigment et 30-75 % en masse de solvant.

Bien évidement cette modification de procédé ne doit en aucun cas affecter les spécifications du produit final : respect des normes et spécifications clients, non seulement d'un point de vue résistance mécanique, vieillissement mais également esthétique. Il convient de citer notamment.:
- une bonne couvrance se traduisant par une faible quantité de « trous d'épingles » (pinholes) n'affectant pas la transparence de manière inacceptable,
- une opacité requise correspondant à une densité optique au moins égale à 3, de préférence à 4, telle que mesurée par un appareil X-Rite 341 ou équivalent,
- une résolution et un aspect d'impression acceptables pour le client, c'est-à-dire similaires à ceux de l'émaillage sur du verre.

L'invention a donc pour but la mise à disposition d'un procédé de sérigraphie de noir sur feuille de polyvinylbutyral intercalaire de vitrage feuilleté, présentant la combinaison d'avantages pré-cités, notamment réalisable en une seule passe avec des temps de « sec au toucher » n'excédant pas 30, de préférence 10 et en particulier 5 minutes. Les inconvénients liés aux émaillages en faces 2 et 4 décrits précédemment, en particulier la nécessité d'une étape supplémentaire mettant en oeuvre un four de recuisson (face 2), et la création du défaut optique en face 4, doivent être éliminés.

Ce but est atteint par l'invention qui a pour objet une composition adaptée à l'impression noire par sérigraphie d'une feuille de polyvinylbutyral destinée à faire partie d'un vitrage feuilleté, caractérisée en ce qu'elle comporte :
- 11 à 13 % en masse de polyvinylbutyral,
- 35 à 40 % en masse d'au moins un diester de diacide carboxylique aliphatique et,
- au moins un pigment noir en quantité et surface spécifique sélectionnées de manière que la viscosité Brookfield à 20 °C de la composition soit comprise entre 9 et 13 Pa.s.

Cette composition présente une rhéologie et une affinité (tension de surface) vis-à-vis de l'écran de sérigraphie et du substrat de polyvinylbutyral la rendant parfaitement adaptée à ce procédé, notamment dans des conditions atmosphériques de travail, telles 10 à 25 °C et 20 à 70 % d'humidité, et qui garantissent un résultat d'impression équivalent à l'impression sur verre plat. L'encre ainsi développée permet d'obtenir avec une seule passe de sérigraphie les hautes qualités optiques, notamment l'absence de trous d'épingle et la densité optique suffisante précitées, simultanément à des temps de sec au toucher courts compatibles avec un procédé en ligne. De plus, la force de cohésion, ou l'adhésion les uns aux autres des constituants d'un vitrage feuilleté comprenant un adhésif intercalaire de polyvinylbutyral imprimé par sérigraphie avec cette composition lui permettent de satisfaire aux critères en vigueur dans tous les pays. L'adhésion du feuilleté avec l'intercalaire imprimé est validée par différents essais mécaniques, parmi lesquels un essai de torsion et la chute de bille, via des valeurs seuil définies par des normes et des cahiers des charges constructeur.

L'intercalaire imprimé feuilleté satisfait également la réglementation en termes de vieillissement / résistance aux brouillards salins, résistance aux acides ou encore rayonnement UV garantissant ainsi la durabilité du produit fini quelles que soient ses conditions d'utilisations.

Selon des caractéristiques préférées de la composition de l'invention :
- le polyvinylbutyral qu'elle contient a une masse moléculaire évaluée par chromatographie par perméation de gel centrée sur une valeur au plus égale à 90000 et, par ordre de préférence croissant, à 80000, 70000, 60000 et 50000 et au moins égale à 20000, de préférence à 30000 en équivalent polystyrène ;
- le taux d' [OH] du polyvinylbutyral qu'elle contient correspond à un pourcentage massique de poly (alcool vinylique) compris entre 17 et 22 % ;
- ledit au moins un diester de diacide carboxylique aliphatique est choisi parmi un succinate, un glutarate et un adipate, notamment de di(alkyle en C1 à C6), de préférence de diméthyle, diéthyle, dipropyle ou dibutyle, et de manière particulièrement préférée, de diméthyle, plusieurs de ces diesters pouvant être contenus en mélange ;
- ledit au moins un pigment noir est constitué d'un mélange de noir de carbone et d'oxyde de fer noir ;
- elle comprend une quantité efficace de plastifiant en tant qu'agent mouillant, telle que 5 à 10 % en masse d'un ester de benzoate, d'un phtalate et/ou son dérivé, d'un adipate et/ou son dérivé, d'un ester d'acide gras, d'un trioctyltrimellitate, d'une triacetine, d'un glycérol, d'un propylèneglycol, d'un sorbitol ou d'un triméthylpentanedioldiisobutyrate, seul ou en mélange de plusieurs d'entre eux;
- elle comprend une quantité efficace d'agent de modification de la tension de surface ne contenant pas de silicone, notamment 0,5 à 2 % en masse de polyacrylate.

L'invention a d'autre part pour objets :
- un procédé d'impression par sérigraphie d'une feuille de polyvinylbutyral destinée à faire partie d'un vitrage feuilleté, dans lequel on applique sur la feuille, à travers un écran de sérigraphie, une composition telle que décrite précédemment, de préférence en une épaisseur de la couche humide comprise entre 10 et 50 µm ; la composition chimique de l'encre a été optimisée afin de garantir qu'avec une faible épaisseur déposée, l'impression sur l'intercalaire garantisse une bonne qualité de dégazage et d'autoclavage, qui constituent des étapes obligatoires pour l'obtention d'un verre feuilleté ;
- une feuille de polyvinylbutyral destinée à faire partie d'un vitrage feuilleté, et imprimée par sérigraphie au moyen d'une composition telle que décrite précédemment ; et
- un vitrage feuilleté comportant une telle feuille de polyvivylbutyral.

L'invention est maintenant illustrée par les exemples suivants.

### EXEMPLE 1

Par sérigraphie d'une feuille intercalaire de polyvinylbutyral avec une encre de composition détaillée dans le tableau ci-dessous, on obtient après assemblage à deux feuilles de verre sodocalcique flotté, un vitrage feuilleté de haute qualité mécanique et à impression noire de haute qualité optique telles que décrites ci-dessus. Le temps de « sec au toucher » de 10 min est court et compatible avec un procédé industriel en ligne continue.

Dans le tableau ci-dessous, toutes les proportions sont indiquées en pourcentages massiques.

| CONSTITUANT | N° CAS | % EN MASSE | % MIN ET MAX EN MASSE |
|---|---|---|---|
| POLYVINYLBUTYRAL | 63148-65-2 | 12 | 11/13 |
| AGENT MOUILLANT | 27987-25-3 | 8 | 5/10 |
| NOIR DE CARBONE | 133386-4 | 9 | 8/12 |
| OXYDE DE FER NOIR | 1317-61-9 | 28 | 28/32 |
| DIESTER | 627-93-0 | 38 | 35/40 |
| | 1119-40-0 | | |
| | 106-65-0 | | |
| CYCLOHEXANONE | 108-94-1 | 4 | 3/5 |
| AGENT DE MODIFICATION DE LA TENSION DE SURFACE | 26376-86-3 | 1 | 0,5/2 |

On évalue la masse moléculaire du polyvinylbutyral de la manière suivante. On prépare des solutions de poudres de polyvinylbutyral à 3 g/l dans le tétrahydrofurane, puis on les injecte sur une colonne de chromatographie par perméation de gel de type Waters Styragel HR4E, 1 ml/min de tétrahydrofurane. Les chromatogrammes sont établis au moyen d'un détecteur évaporatif à diffusion de lumière. Le pic large observé à 7-7,1 min indique des masses en équivalent PS de 46000-55000, c'est-à-dire pratiquement centrées sur 50000.

Le taux d' [OH] du polyvinylbutyral correspond à un pourcentage massique de poly (alcool vinylique) de 18 %.

L'agent mouillant fait également office de plastifiant c'est-à-dire qu'il autorise une plus grande déformation du film d'encre imprimé sans dégradation de ses propriétés optiques. Il s'agit ici du dimethylcyclohexyl phtalate.

La surface spécifique du noir de carbone est de 65 m²/g, des valeurs de 40 à 150 m²/g convenant en général.

Le diester est un mélange de 60 % en masse de glutarate de diméthyle, 20 % en masse de succinate de diméthyle et 20 % en masse d'adipate de diméthyle.

L'agent de modification de la tension de surface est un polyacrylate ; il ne contient pas de silicone.

La viscosité Brookfield de l'encre à 20 °C est de 11 Pa.s, des valeurs comprises entre 9 et 13 Pa.s convenant dans le cadre de l'invention. Cette mesure est effectuée de la manière suivante. On diminue la viscosité de l'encre à une valeur stable par rotation pendant au moins 8 heures d'un rouleau dans l'encre. Un échantillon de cette dernière est prélevé, sur lequel est mesurée la viscosité au moyen d'un viscosimètre cône-plan.

### CONTRE-EXEMPLE 1

On mélange les mêmes constituants qu'à l'exemple 1, en ne modifiant que les proportions massiques de l'agent mouillant à 6 %, de l'oxyde de fer noir à 30 %, du diester à 20 %, et de la cyclohexanone à 22 %.

Avec cette composition contenant une proportion de diester relativement faible, par remplacement de quasiment la moitié de celui-ci par de la cyclohexanone, les viscosités obtenues et la rapidité de séchage ne permettent pas une impression industrielle en grande série. On observe une apparition de pinholes (trous d'épingle) en beaucoup trop grand nombre à l'impression et pendant le passage dans l'autoclave, et un séchage dans l'écran de sérigraphie.

## Revendications

1. Composition adaptée à l'impression noire par sérigraphie d'une feuille de polyvinylbutyral destinée à faire partie d'un vitrage feuilleté, **caractérisée en ce qu'**elle comporte
- 11 à 13 % en masse de polyvinylbutyral,
- 35 à 40 % en masse d'au moins un diester de diacide carboxylique aliphatique et
- au moins un pigment noir en quantité et surface spécifique sélectionnées de manière que la viscosité Brookfield à 20 °C de la composition soit comprise entre 9 et 13 Pa.s.

2. Composition selon la revendication 1, **caractérisée en ce que** le polyvinylbutyral qu'elle contient a une masse moléculaire évaluée par chromatographie par perméation de gel centrée sur une valeur au plus égale à 90000 et, par ordre de préférence croissant, à 80000, 70000, 60000 et 50000 en équivalent polystyrène.

3. Composition selon l'une des revendications précédentes, **caractérisée en ce que** le polyvinylbutyral qu'elle contient a une masse moléculaire évaluée par chromatographie par perméation de gel centrée sur une valeur au moins égale à 20000, de préférence à 30000 en équivalent polystyrène.

4. Composition selon l'une des revendications précédentes, **caractérisée en ce que** le taux d' [OH] du polyvinylbutyral qu'elle contient correspond à un pourcentage massique de poly (alcool vinylique) compris entre 17 et 22 %.

5. Composition selon l'une des revendications précédentes, **caractérisée en ce que** ledit au moins un diester de diacide carboxylique aliphatique est choisi parmi un succinate, un glutarate et un adipate.

6. Composition selon l'une des revendications précédentes, **caractérisée en ce que** ledit au moins un pigment noir est constitué d'un mélange de noir de carbone et d'oxyde de fer noir.

7. Composition selon l'une des revendications précédentes, **caractérisée en ce qu'**elle comprend une quantité efficace de plastifiant en tant qu'agent mouillant.

8. Composition selon l'une des revendications précédentes, **caractérisée en ce qu'**elle comprend une quantité efficace d'agent de modification de la tension de surface ne contenant pas de silicone.

9. Procédé d'impression par sérigraphie d'une feuille de polyvinylbutyral destinée à faire partie d'un vitrage feuilleté, **caractérisé en ce qu'**on applique sur la feuille, à travers un écran de sérigraphie, une composition selon l'une des revendications précédentes.

10. Procédé selon la revendication 9, **caractérisé en ce que** l'épaisseur de la couche humide de composition appliquée est comprise entre 10 et 50µm.

11. Feuille de polyvinylbutyral destinée à faire partie d'un vitrage feuilleté, et imprimée par sérigraphie au moyen d'une composition selon l'une des revendications 1 à 8.

12. Vitrage feuilleté comportant une feuille de polyvinylbutyral selon la revendication 11.

## Patentansprüche

1. Zusammensetzung, die für schwarzen Siebdruck auf eine Polyvinylbutyralfolie geeignet ist, die als Bestandteil einer Verbundglasscheibe vorgesehen ist, **dadurch gekennzeichnet, dass** sie Folgendes aufweist:
- 11 bis 13 Gewichts-% Polyvinylbutyral,
- 35 bis 40 Gewichts-% von mindestens einem Diester einer aliphatischen Dicarbonsäure, und
- mindestens ein schwarzes Pigment in einer Menge und mit einer spezifischen Oberfläche, die derart ausgewählt sind, dass die Brookfield-Viskosität der Zusammensetzung bei 20 °C zwischen 9 und 13 Pa·s liegt.

2. Zusammensetzung nach Anspruch 1, **dadurch gekennzeichnet, dass** das Polyvinylbutyral, das sie enthält, eine durch Gelpermeationschromatographie ermittelte Molekülmasse aufweist, die um einen polystyroläquivalenten Wert von höchstens 90000 und, in vorzugsweise aufsteigender Reihenfolge, von 80000, 70000, 60000 und 50000 zentriert ist.

3. Zusammensetzung nach einem der vorhergehenden Ansprüche, **dadurch gekennzeichnet, dass** das Polyvinylbutyral, das sie enthält, eine durch Gelpermeationschromatographie ermittelte Molekülmasse aufweist, die um einen polystyroläquivalenten Wert von mindestens 20000, vorzugsweise 30000 zentriert ist.

4. Zusammensetzung nach einem der vorhergehenden Ansprüche, **dadurch gekennzeichnet, dass** der Gehalt an [OH] im Polyvinylbutyral, das sie enthält, einem Anteil an Polyvinylalkohol in Gewichtsprozent zwischen 17 und 22 % entspricht.

5. Zusammensetzung nach einem der vorhergehenden Ansprüche, **dadurch gekennzeichnet, dass** der mindestens eine Diester einer aliphatischen Dicarbonsäure aus einem Succinat, einem Glutarat und einem Adipat ausgewählt ist.

6. Zusammensetzung nach einem der vorhergehenden Ansprüche, **dadurch gekennzeichnet, dass** das mindestens eine schwarze Pigment aus eines Mischung aus Ruß und schwarzem Eisenoxid besteht.

7. Zusammensetzung nach einem der vorhergehenden Ansprüche, **dadurch gekennzeichnet, dass** sie eine wirksame Menge eines Weichmachers als Benetzungsmittel umfasst.

8. Zusammensetzung nach einem der vorhergehenden Ansprüche, **dadurch gekennzeichnet, dass** sie eine wirksame Menge eines Mittels zur Modifizierung der Oberflächenspannung umfasst, das kein Silikon enthält.

9. Siebdruckverfahren für eine Polyvinylbutyralfolie, die als Bestandteil einer Verbundglasscheibe vorgesehen ist, **dadurch gekennzeichnet, dass** eine Zusammensetzung nach einem der vorhergehenden Ansprüche über eine Siebdruckschablone auf die Folie aufgebracht wird.

10. Verfahren nach Anspruch 9, **dadurch gekennzeichnet, dass** die Dicke der aufgebrachten feuchten Zusammensetzungsschicht zwischen 10 und 50 µm beträgt.

11. Polyvinylbutyralfolie, die als Bestandteil einer Verbundglasscheibe vorgesehen ist und mittels Siebdruck mit einer Zusammensetzung nach einem der Ansprüche 1 bis 8 bedruckt ist.

12. Verbundglasscheibe mit einer Polyvinylbutyralfolie nach Anspruch 11.

## Claims

1. Composition suitable for the black printing, via screen printing, of a sheet of polyvinyl butyral intended to be part of a laminated glazing unit, **characterized in that** it comprises:
- 11% to 13% by weight of polyvinyl butyral,
- 35% to 40% by weight of at least one aliphatic dicarboxylic acid diester, and
- at least one black pigment in an amount and with a specific surface area that are selected so that the Brookfield viscosity of the composition at 20°C is between 9 and 13 Pa.s.

2. Composition according to Claim 1, **characterized in that** the polyvinyl butyral that it contains has a molecular weight evaluated by gel permeation chromatography centered about a value at most equal to 90 000 and, in order of increasing preference, to 80 000, 70 000, 60 000 and 50 000 in polystyrene equivalents.

3. Composition according to either of the preceding claims, **characterized in that** the polyvinyl butyral that it contains has a molecular weight evaluated by gel permeation chromatography centered about a value at least equal to 20 000, preferably to 30 000 in polystyrene equivalents.

4. Composition according to one of the preceding claims, **characterized in that** the [OH] content of the polyvinyl butyral that it contains corresponds to a weight percentage of poly(vinyl alcohol) between 17% and 22%.

5. Composition according to one of the preceding claims, **characterized in that** said at least one aliphatic dicarboxylic acid diester is selected from a succinate, a glutarate or an adipate.

6. Composition according to one of the preceding claims, **characterized in that** said at least one black pigment consists of a mixture of carbon black and black iron oxide.

7. Composition according to one of the preceding claims, **characterized in that** it comprises an effective amount of plasticizer as wetting agent.

8. Composition according to one of the preceding claims, **characterized in that** it comprises an effective amount of a surface tension modifier that does not contain silicone.

9. Process for printing, via screen printing, a sheet of polyvinyl butyral intended to be part of a laminated glazing unit, **characterized in that** a composition according to one of the preceding claims is applied to the sheet, through a screen-printing screen.

10. Process according to Claim 9, **characterized in that** the thickness of the wet layer of composition applied is between 10 and 50 µm.

11. Sheet of polyvinyl butyral intended to be part of a laminated glazing unit, and printed, via screen printing, using a composition according to one of Claims 1 to 8.

12. Laminated glazing unit comprising a sheet of polyvinyl butyral according to Claim 11.
